# EUROPEAN PATENT APPLICATION

(11) **EP 4 707 334 A1**
(43) Date of publication of application: **11.03.2026**
(21) Application number: 24382954.6
(22) Date of filing: 05.09.2024
(51) Int. Cl.: C08L 67/02

(54) **THERMOPLASTIC COMPOSITION FOR THE MANUFACTURE OF TRANSPARENT FILMS**

(71) Applicant: Sociedad Anónima Minera Catalano Aragonesa, 50001 Zaragoza (ES)
(72) Inventor: ALFONSO ALEGRE, MARIA JOSÉ, 50001 ZARAGOZA (ES); CABALLERO LÓPEZ, MIGUEL ÁNGEL, 50001 ZARAGOZA (ES); GRACIA CASADO, ALFREDO, 50001 ZARAGOZA (ES)
(74) Representative: Schäfer, Matthias W.

(57) **Abstract**

Thermoplastic composition for the manufacture of transparent films, and the biodegradable and compostable transparent film obtained, both in monolayer and multilayer structure, comprising thermoplastic potato starch, in a proportion greater than 10% by weight with respect to the total, biodegradable biopolyesters, in a proportion greater than 50% and less than 90% by weight with respect to the total, and other biomaterials and additives, in a proportion between 0% and 10% by weight with respect to the total, the composition being biodegradable and compostable.

This composition using potato starch allows, for the same dry starch content and the same production conditions, to develop films with greater transparency, less haze, less colour and odour than with corn starch or other alternatives known in the market, maintaining or improving the rest of the mechanical properties (resistance to breakage, tearing and puncture), while increasing the melt speed.

## Description

As its title indicates, the present specification relates to a thermoplastic composition for the manufacture of transparent films, and the biodegradable and compostable transparent film obtained, both in monolayer and multilayer structure, comprising thermoplastic potato starch, in a proportion greater than 10% by weight with respect to the total, biodegradable biopolyesters, in a proportion greater than 50% and less than 90% by weight with respect to the total, and other biomaterials and additives, in a proportion between 0% and 10% by weight with respect to the total, the composition being biodegradable and compostable.

### Field of the invention

The invention relates to the field of thermoplastic compositions for the manufacture of biodegradable and compostable transparent films.

### State of the art

At present, a large number of biobased and biodegradable biopolymers are known in different media, such as industrial, anaerobic, home, soil, water composting, etc., whereby films whose transparency is valued such as, for example, for the application of fruit and vegetable counter bags, can be produced. For this application, films of a thickness between 7 and 20 microns are usually used, which, in addition to good transparency, must have excellent mechanical properties of resistance to breakage, tearing and puncture.

Furthermore, an increasing number of regulations are appearing that demand that these bags must also be biodegradable in industrial composting facilities or in domestic composting equipment, even requiring a minimum biobased content of 60% in some cases.

The marketing of products with a high starch content is very interesting because of its low cost, especially that of corn. Additionally, starch is biobased and biodegradable in most media, which facilitates meeting the requirements of the regulations for counter bags. We can find a large number of films that incorporate corn or potato starch, such as, for example, that disclosed in GB2573603A *"Bag for fruits and vegetables"* or CN102702579A *"Potato starch-based edible composite food packaging film and preparation method thereof'* that seek to obtain a biodegradable product at a low cost. However, by increasing the starch content, these products give us the problem that the transparency of the films decreases and their colour and odour increase, due to the thermal degradation of the starch during its mixture with other biomaterials and during the manufacture of the film, giving rise to a product that is not very visually pleasant for use, giving a sensation of lower quality. They may be valid for some applications, but they are not especially well received for counter bags for fruits and vegetables.

Currently, attempts are being made to resolve this problem by manufacturing multilayer films, with at least three layers in coextrusion equipment. The product with starch is in the core layer and for the outer layers starch-free products with greater transparency are used. This results in a film with sufficient transparency and little odour/colour, which is much more pleasant to use. The core layer product usually contains thermoplastic starch (plasticised starch) and other biopolymers that improve the processability and properties of the product.

In these multilayer films, the thermoplastic starch comprises one or more starches and one or more plasticisers, and the other biopolymers are biodegradable. The content of thermoplastic starch is usually comprised between 15% and 50% by weight with respect to the total and that of the other biodegradable biopolymers between 45% and 80% by weight with respect to the total. The core layer typically accounts for 50-90% of the total thickness, preferably 60-85% and more preferably 70-80%.

In these multilayer films, the product of the outer layers are usually mixtures of biodegradable aliphatic or biodegradable aliphatic-aromatic biopolyesters, and may also contain other biopolymers and additives, preferably below 10%. The outer layers typically account for 10-40% of the total thickness, preferably 15-40% and more preferably 20-30%.

However, this solution of multilayer films in coextrusion equipment presents several important problems, one of them being that not all film producers have coextrusion technology or do not want to dedicate it to biopolymers, which implies a significant additional economic investment for them.

Another problem of multilayer films is that the biopolymers of the outer layers are expensive, significantly increasing the final cost of the film. To try to reduce costs, producers usually minimise the thickness of the most expensive outer layers, usually making a 10/80/10 distribution which entails, for 10 microns total, 1 micron in the outer layers, which is very difficult to achieve in most coextrusion equipment.

Furthermore, in multilayer films the outer layers usually have a biobased content of less than 50%, since the biopolyesters normally used for their good processing and properties have a biobased content of less than 45% (for example, poly(butylene sebacate-co-butylene terephthalate) (PBTSeT)). Although the outer layer may also contain polylactic acid (PLA) having a biobased content of 100%, its concentration is usually less than 10% so as not to adversely affect the tear strength. The limitation in the biobased content of the outer layer to less than 50% means that, although, thanks to the thermoplastic starch content, it may have 60% biobased content, the biobased content of the entire resulting film, considering all layers, is less than 60% required by some regulations for counter bags.

We find some multilayer embodiments such as the one disclosed in ES2420830 *"Polylactic acid (PLA) sheet with good antistatic properties",* which seeks to reduce the static of multilayer film wherein the outer layers are based on PLA by adding 0.01-20% of starch. The use of starch is to reduce the cost, but transparency is achieved with the PLA, although they do not demonstrate or intend to achieve greater transparency than other embodiments, since that is not the technical problem they aim to resolve.

A solution is also known such as that disclosed in CN110753720A *"Biodegradable three-layered film"* which protects a multilayer film wherein the outer layers contain biopolyesters containing sebacic acid which provides greater transparency than other biopolyesters such as PBAT and the inner layer of starch, although it does not specify which type of starch. Each outer layer is 10-20% of the total thickness, and the inner layer contains plasticised starch and aliphatic-aromatic biopolyester, and the biopolyesters of the outer layers contain highly transparent sebacic acid, but despite everything they only achieve a haze range of 35-60% with a multilayer structure, similar to that achieved with the composition of the invention with monolayer structure. Thus, the composition of the invention achieves a haze of 55%, within the range of 35-60% for which CN110753720A needs a multilayer film, and with the composition of the invention, a multilayer is achieved with potato in the core layer and PBAT in the outer layers that it obtains has a haze of 15%, lower than the minimum value defined by CN110753720A (35%), i.e. greatly exceeding its transparency characteristic and significantly improving this state of the art, obtaining a much more transparent film with a higher starch content.

It is clear that there is a need for biodegradable and compostable compositions, with a high biobased content, which allow achieving films with maximum transparency without impairing their mechanical properties, capable of meeting the regulations for counter bags for fruits and vegetables, and other applications.

### Description of the invention

In order to resolve the problem currently existing in the manufacture of biodegradable and compostable films, achieving maximum transparency, improving the current state of the art, the thermoplastic composition for the manufacture of transparent films has been devised, which comprises:
- thermoplastic potato starch, in a proportion greater than 10% by weight with respect to the total,
- biodegradable biopolyesters, in a proportion greater than 50% and less than 90% by weight with respect to the total, and
- other biomaterials and additives, other than a thermoplastic starch, in a proportion between 0% and 10% by weight with respect to the total,
the composition being biodegradable and compostable.

The object of the invention is both the thermoplastic composition for the manufacture of transparent films and the biodegradable and compostable transparent film obtained with it.

The composition may further comprise another complementary thermoplastic starch, in a proportion of less than 30% by weight with respect to the total, containing one or more starches originating from the group formed by corn, pea, tapioca, cassava or obtained from starch-containing biomasses including waste from the agri-food industry. This addition of another complementary thermoplastic starch would be done at the cost of reducing biodegradable biopolyesters and/or the other biomaterials and additives, if any, by the same percentage.

The thermoplastic potato starch and, where appropriate, the complementary thermoplastic starch, comprise one or more plasticisers chosen from the group formed by water, polyhydric alcohols, ethers, thioethers, the esters thereof, any other compound or polymer capable of transforming a starch into thermoplastic starch, or a combination thereof.

Thermoplastic potato starch preferably contains potato starch from the group consisting of biomass and waste from the food industry that contain potato starch, understanding as waste from the food industry discarded potatoes, washing water, etc.

The starch or starches will be chosen from the group formed by native starch, modified starch, starch derivatives, or a mixture thereof.

The biopolyesters are chosen from the group formed by poly(butylene adipate-co-butylene terephthalate) (PBAT), poly(butylene sebacate-co-butylene terephthalate) (PBTSeT), poly(butylene succinate) (PBS), poly(butylene succinate-co-adipate) (PBSA), polylactic acid (PLA), polyhydroxy acids (PHA), poly(butylene terephthalate-co-butylene succinate) PBTS or their mixtures, being preferably chosen from the group formed by poly(butylene adipate-co-butylene terephthalate) (PBAT) and poly(butylene sebacate-co-butylene terephthalate) (PBTSeT).

The other biomaterials and additives are chosen from the group formed by polyvinyl acetate (PVA), polypropylene carbonate) (PPC), polyglycolic acid (PGA), cellulose, modified cellulose, fibres, colouring agents, impact modifiers, organic and inorganic fillers, heat stabilisers, hydrolysis stabilisers, UV stabilisers, lubricants, enzymes, biodegradability accelerating additives, other additives and other biodegradable polymers.

This thermoplastic composition is used for the manufacture of a transparent film, with a monolayer or multilayer structure comprising at least one layer containing a composition as described above, preferably having a thickness comprised between 7 and 100 microns.

In a preferred embodiment with multilayer structure, the film has a structure formed by an intermediate layer and two outer layers, the intermediate layer being the one containing a composition as described above. The outer layers may have different thicknesses. Likewise, the outer layers may have the same or different composition. Preferably the outer layers consist of biopolyesters chosen from the group formed by aliphatic biopolyesters and aliphatic-aromatic biopolyesters, and more preferably they consist of biopolyesters chosen from the group formed by poly(butylene adipate-co-butylene terephthalate) (PBAT) and poly(butylene sebacate-co-butylene terephthalate) (PBTSeT).

### Advantages of the invention

The main advantage of this composition using potato starch, for the same dry starch content and the same production conditions, is that it allows the development of biopolymers and films with greater transparency, less haze, less colour and odour than using corn starch or other alternatives known in the market, maintaining or improving the rest of the mechanical properties (resistance to breakage, tearing and puncture).

Another notable advantage of this composition is that the melt volume-flow rate (MVR) with potato starch is higher than with corn, that is, its viscosity is lower, which makes it possible to increase production in the film manufacturing lines and lower the production cost.

It is important to note that this composition makes it possible to develop with potato starch a simpler, cheaper monolayer structure, with a higher biobased content and less odour than multilayer structures based exclusively on corn starch, but with a similar or improved transparency.

Thanks to this composition, it is also a great advantage to be able to use a simpler and more accessible monolayer extruder on the market and to be able to increase the biobased content (starch) while maintaining a transparency, colour and odour similar to multilayer film.

Likewise, we cannot fail to highlight that this composition also makes it possible to develop with potato starch a multilayer structure with biopolyesters in the outer layers and the biopolymer with starch in the inner layer, much more transparent than current solutions and with a higher biobased content.

This allows the manufacture of films for all those applications wherein transparency is highly valued, such as for the application of counter bags for fruits and vegetables, being biodegradable in industrial composting facilities and in domestic composting equipment, complying with the requirements of biobased content equal to or greater than 60% in accordance with the regulations in force in some countries, such as France and Italy. Another important advantage of the invention is that it allows the reuse as thermoplastic potato starch of potato starch from waste such as biomass or waste from the food industry, which results in a significant improvement in its ecological sustainability.

### Description of the figures

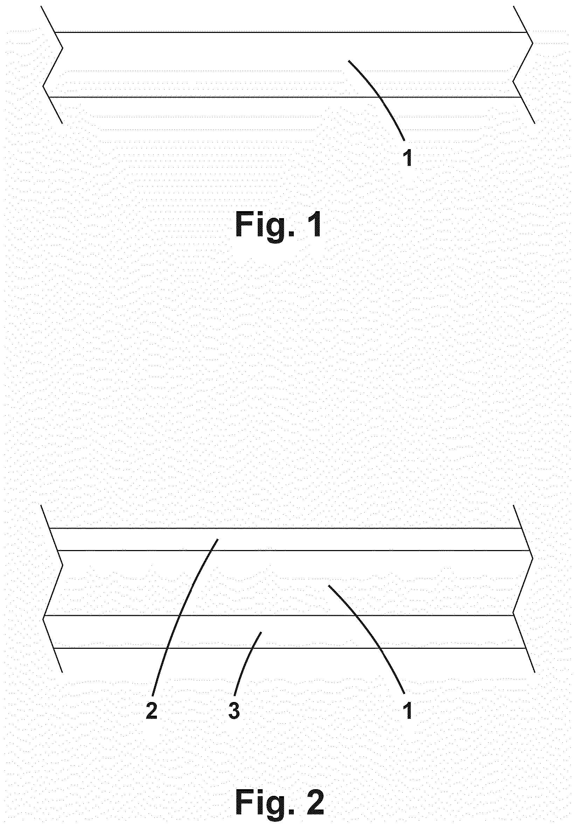

Figure 1 shows a sectional view of an example of a monolayer film.
Figure 2 shows a sectional view of an example of a multilayer film formed from three layers.

### Preferred embodiment of the invention

The thermoplastic composition for the manufacture of transparent films comprises
- thermoplastic potato starch, in a proportion greater than 10% by weight with respect to the total,
- biodegradable biopolyesters, in a proportion greater than 50% and less than 90% by weight with respect to the total, and
- other biomaterials and additives, other than a thermoplastic starch, in a proportion between 0% and 10% by weight with respect to the total,
the composition being biodegradable and compostable.

The composition may further comprise another complementary thermoplastic starch, in a proportion of less than 30% by weight with respect to the total, containing one or more starches originating from the group formed by corn, pea, tapioca, cassava or obtained from starch-containing biomasses including waste from the agri-food industry. This addition of another complementary thermoplastic starch would be done at the cost of reducing biodegradable biopolyesters and/or the other biomaterials and additives, if any, by the same percentage.

The total amount of thermoplastic starch (thermoplastic potato starch + complementary thermoplastic starch) will always be ≤40% by weight with respect to the total, since above those values the mechanical, optical and organometallic properties are not suitable for flexible film applications.

The thermoplastic potato starch and, where appropriate, the complementary thermoplastic starch, comprise one or more plasticisers chosen from the group formed by water, polyhydric alcohols, ethers, thioethers, the esters thereof, any other compound or polymer capable of transforming a starch into thermoplastic starch, or a combination thereof.

The starch or starches will be chosen from the group formed by native starch, modified starch, starch derivatives, or a mixture thereof.

The biopolyesters are chosen from the group formed by poly(butylene adipate-co-butylene terephthalate) (PBAT), poly(butylene sebacate-co-butylene terephthalate) (PBTSeT), poly(butylene succinate) (PBS), poly(butylene succinate-co-adipate) (PBSA), polylactic acid (PLA), polyhydroxy acids (PHA), poly(butylene terephthalate-co-butylene succinate (PBTS) or their mixtures, being preferably chosen from the group formed by poly(butylene adipate-co-butylene terephthalate) (PBAT) and poly(butylene sebacate-co-butylene terephthalate) (PBTSeT).

The other biomaterials and additives are chosen from the group formed by polyvinyl acetate (PVA), polypropylene carbonate) (PPC), polyglycolic acid (PGA), cellulose, modified cellulose, fibres, colouring agents, impact modifiers, organic and inorganic fillers, heat stabilisers, hydrolysis stabilisers, UV stabilisers, lubricants, enzymes, biodegradability accelerating additives, other additives and other biodegradable polymers.

Thermoplastic potato starch preferably contains potato starch from the group consisting of biomass and waste from the food industry that contain potato starch, understanding as waste from the food industry discarded potatoes, washing water, etc.

This thermoplastic composition is used for the manufacture of a transparent film comprising at least one layer (1) containing a composition as described in the preceding claims, preferably having a thickness comprised between 7 and 100 microns.

The film may have a monolayer, or multilayer structure. In case of having a multilayer structure, it may have two or more layers.

In a preferred embodiment with multilayer structure the film has a structure formed by an intermediate layer (1) and two outer layers (2,3), the intermediate layer (1) being the one containing a composition as described in the preceding claims 1 to 7. The outer layers (2,3) can have different thicknesses. Also, the outer layers (2,3) may have the same or different composition.

Preferably, the outer layers (2,3) consist of biopolyesters chosen from the group formed by aliphatic biopolyesters and aliphatic-aromatic biopolyesters, and more preferably they consist of biopolyesters chosen from the group formed by poly(butylene adipate-co-butylene terephthalate) (PBAT) and poly(butylene sebacate-co-butylene terephthalate) (PBTSeT).

### Examples of experimental tests and their results

This composition has been subjected to intense experimental tests to determine its components, their percentages and their effect on the solution of the technical problem posed, of which we show some of the results by way of example.

### Example 1 - Monolayer blown film

For these comparative tests, monolayer films have been made using different compositions. In tests 2, 4, 6 and 8, native corn starch was used, and in tests 1, 3, 5, and 7, potato starch extracted from biomass waste from the agri-food industry was used. In all cases, sorbitol has been used as a plasticiser and PBAT as a biopolyester.

It is verified in Table 1 that for the same amount of dry starch, in those compositions with potato starch the haze is lower than with corn starch, therefore the transparency is greater.

**Table 1 - Monolayer blown film**

| **TEST** | **Starch** | **% Dry starch** | **% Plasticiser** | **Thickness, microns** | **Haze (ASTM D1003), %** |
|---|---|---|---|---|---|
| **1** | Potato | 12.00 | 5.00 | 12 | 45 |
| | | | | 19 | 44 |
| **2** | Corn | 12.00 | 5.00 | 11 | 58 |
| | | | | 20 | 54 |
| **3** | Potato | 15.00 | 6.20 | 13 | 57 |
| | | | | 20 | 53 |
| **4** | Corn | 15.00 | 6.20 | 13 | 74 |
| | | | | 19 | 72 |
| **5** | Potato | 17.00 | 7.00 | 12 | 54 |
| | | | | 19 | 55 |
| **6** | Corn | 17.00 | 7.00 | 10 | 84 |
| | | | | 20 | 78 |
| **7** | Potato | 19.00 | 8.00 | 11 | 55 |
| | | | | 21 | 56 |
| **8** | Corn | 19.00 | 8.00 | 10 | 94 |
| | | | | 20 | 95 |

Table 2 shows that the formation or compounding conditions used in the previous tests are similar in all cases:

**Table 2 - Compounding conditions of the tests of Table 1**

| **TEST** | **Chimneys** | **kg/h** | **Barrel temperatures, °C** | **RPM** | **Vacuum** | **Melting temperatu re, °C** | **Torque, %** | **SME (specific energy), kWh/kg** | **Pressure, bar** |
|---|---|---|---|---|---|---|---|---|---|
| **1** | AAC | 20 | 90/170*2/135*3 | 600 | 1000 | 182-190 | 47-55 | 0.32-0.36 | 21-26 |
| **2** | AAC | 20 | 90/170*2/135*3 | 600 | 1000 | 185-194 | 51-57 | 0.362-0.385 | 21-26 |
| **3** | AAC | 20 | 90/170*2/135*3 | 600 | 1000 | 181-184 | 45-53 | 0.322-0.351 | 21-27 |
| **4** | AAC | 20 | 90/170*2/135*3 | 600 | 1000 | 132-188 | 42-48 | 0.303-0.327 | 22-27 |
| **5** | AAC | 20 | 90/170*2/135*3 | 600 | 1000 | 176-182 | 47-60 | 0.297-0.308 | 21-27 |
| **6** | AAC | 20 | 90/170*2/135*3 | 600 | 1000 | 188-194 | 50-56 | 0.358-0.380 | 23-26 |
| **7** | AAC | 20 | 90/170*2/135*3 | 600 | 1000 | 184-190 | 49-55 | 0.320-0.340 | 22-26 |
| **8** | AAC | 20 | 90/170*2/135*3 | 600 | 1000 | 194-200 | 52-58 | 0.370-0.390 | 24-28 |

In table 3, we verify the colour of the pellets with which the films of the tests of Table 1 have been manufactured, verifying how less colour and odour is obtained with potato starch than with corn:

**Table 3 - Colour of the pellets with which the films of the tests of Table 1 have been manufactured**

| **TEST** | **L** | **a** | **b** | **Yi** |
|---|---|---|---|---|
| **1** | 76 | 2 | 19 | 43 |
| **2** | 74 | 3 | 20 | 46 |
| **3** | 76 | 2 | 19 | 42 |
| **4** | 74 | 3 | 20 | 46 |
| **5** | 76 | 2 | 19 | 42 |
| **6** | 71 | 3 | 20 | 48 |
| **7** | 73 | 2 | 19 | 44 |
| **8** | 68 | 3 | 20 | 50 |

In Table 4 we have the mechanical properties of the pellets with which the films of the tests of Table 1 have been manufactured, verifying that the mechanical properties with potato starch are similar, or even better than with corn:

**Table 4 - Mechanical properties of the pellets with which the films of the tests of Table 1 have been manufactured**

| **TEST** | **MD tensile (ISO527-3)** | | **TD tensile (ISO527-3)** | | **MD Elmendorf tear strength (ISO6383-2)** | **TD Elmendorf tear strength (ISO6383-2)** | **Puncture (ISO14477)** | | |
|---|---|---|---|---|---|---|---|---|---|
| | **Stress at break, MPa** | **Deformation at break, %** | **Stress at break, MPa** | **Deformation at break, %** | **Tear strength mN** | **Tear strength mN** | **Maximum load, N** | **Maximum load extension, mm** | **Energy at maximum load** |
| **1** | 30.3 | 390 | 19.6 | 464 | 815 | 1349 | | | |
| | 23.3 | 436 | 25.3 | 556 | 1787 | 2827 | 0.8 | 4.4 | 2.1 |
| **2** | 26 | 482 | 17.2 | 423 | 844 | 1579 | | | |
| | 21.5 | 367 | 28.1 | 628 | 1621 | 2408 | 0.8 | 4.6 | 2.3 |
| **3** | 23.4 | 267 | 17 | 414 | 802 | 1933 | | | |
| | 20.1 | 441 | 21 | 550 | 2190 | 2823 | 0.7 | 4.0 | 1.6 |
| **4** | 21 | 259 | 13.5 | 366 | 496 | 1148 | | | |
| | 19.4 | 444 | 22.1 | 532 | 1973 | 2755 | 0.7 | 3.9 | 1.6 |
| **5** | 21.5 | 312 | 18.2 | 465 | 836 | 2200 | | | |
| | 21.7 | 466 | 23.2 | 596 | 2079 | 2838 | 0.7 | 4.7 | 12.0 |
| **6** | 19 | 325.4 | 15.4 | 374 | 902 | 1363 | | | |
| | 17.6 | 365 | 24.6 | 623 | 1957 | 2720 | 0.7 | 3.9 | 17 |
| **7** | 20 | 315 | 18 | 380 | 810 | 2105 | | | |
| | 19 | 360 | 24.1 | 605 | 2100 | 2800 | 0.7 | 4.8 | 2.1 |
| **8** | 18 | 320 | 15 | 360 | 850 | 1200 | | | |
| | 17 | 350 | 24 | 610 | 1905 | 2650 | 0.7 | 4.2 | 2.0 |

In the following table 5, we see the melt volume-flow rate (MVR) of the pellets with which the films of the tests of Table 1 have been manufactured, verifying how the melt volume-flow rate (MVR) with potato starch is higher than with corn, i.e. It has lower viscosity, which can increase production in the film lines and lower the production cost.

**Table 5 - Melt volume-flow rate (MVR) of the pellets with which the films of the tests of Table 1 have been manufactured**

| **TEST** | **MVR 190°C/2.16 kg (humidity)** |
|---|---|
| **1** | 4.2 (0.12%) |
| **2** | 3.97 (0.12%) |
| **3** | 2.97 (0.15%) |
| **4** | 2.41 (0.12%) |
| **5** | 2.75 (0.2%) |
| **6** | 2.4 (0.16%) |
| **7** | 2.65 (0.15%) |
| **8** | 2.38 (0.16%) |

### Example 2 - Comparison between monolayer and multilayer film

To conduct this experimental test, two monolayer films were used, one with corn starch (test 4) and the other with potato starch (test 7), both from example 1, and two new films with a 20/80/10 multilayer structure, wherein the outer layers are made of PBAT, and the inner layer with corn starch (test 9) and potato starch (test 10).

**Table 6 - Comparison of haze of monolayer and multilayer film with potato and corn starch.**

| **TEST** | **Composition** | **Film** | **Thickness, microns** | **Haze %** |
|---|---|---|---|---|
| **4** | Test 4 biopolymer (15% dry corn starch) | Monolayer | 10-15 | 74 |
| **7** | Test 7 biopolymer (19% dried potato starch) | Monolayer | 10-15 | 55 |
| **9** | Test 4 PBAT / biopolymer (15% dry corn starch) / PBAT | Multilayer 20/80/10 | 1.2/10/1.2 | 45 |
| **10** | Test 7 PBAT /Biopolymer (19% dried potato starch) / PBAT | Multilayer 20/80/10 | 1.2/10/1.2 | 15 |

In this table we can see how the problem of the high haze of monolayer films with starch (test 4) is being solved by developing multilayer structures (test 9) wherein the core layer contains starch, which provides a high biobased content, biodegradability and enables lowering the price of the structure, and the outer layers a biopolyester, PBAT in this case, which lowers the haze of the final structure (45 vs 74%), but makes it more expensive and decreases its biobased content.

The multilayer film of test 9 corresponds to a film of composition already known in CN110753720A, with corn starch, wherein the outer layers contain PBTSeT instead of PBAT as it is more transparent, but we verified how film 10, using potato film, far exceeds its results.

The comparison of results between test 7 and test 4 allows us to verify how a lower haze is obtained with potato starch, even with a higher percentage (19% vs 15%). This implies a significant advantage in technical requirements for the application, thanks to its greater transparency.

The comparison of results between test 7 and test 9 indicates that the haze and the rest of the properties are very similar with monolayer with potato (with 19% dry starch) and with multilayer with corn (with 15% dry starch), obtaining a haze of 55% compared to 45%. This implies a great advantage in being able to use a simpler monolayer extruder, accessible on the market, and in being able to increase the biobased content (starch) while maintaining a transparency, colour and odour similar to multilayer film.

The comparison of results between test 10 and test 9 shows that less haze is obtained in coextrusion using potato starch (19% dry starch) versus corn starch (15% dry starch). This gives us the advantage of obtaining a much more transparent film with a higher starch content, with the additional advantage of a higher biobased content, due to a higher starch content, with very good transparency.

In the case of test 10, the haze values of 15% obtained are much lower than the range achieved in already known solutions, with corn starch, wherein the outer layers contain PBTSeT instead of PBAT as it is more transparent, such as CN110753720A, wherein a haze of 35-60% is obtained.

### Example 3 - Comparison of mechanical properties between multilayer films

In this experimental test, the mechanical properties of the two multilayer films, one with corn starch, and the other with potato starch, previously used in example 2, have been compared. The comparison of results shows that, although the mechanical properties are similar, or even better, with potato starch (19% dry starch - test 10) than with corn starch (15% dry starch - test 9), the transparency obtained in the case of test 10 is much higher, as we saw earlier.

**Table 7 - Comparison of multilayer properties with potato and corn starch**

| **TEST** | **MD tensile strength (IS0527-3)** | | | | | | **MD Elmendorf tear strength (ISO6383-2)** | **TD Elmendorf tear strength (ISO6383-2)** |
|---|---|---|---|---|---|---|---|---|
| | **Thickness, microns** | **Module, MPa** | **Creep stress, MPa** | **Creep deformation, %** | **Stress at break, MPa** | **Deformation at break, %** | **Tear strength mN** | **Tear strength mN** |
| **9** | 13 | 190 | 7 | 7 | 22 | 299 | 881 | 1859 |
| **10** | 12 | 180 | 8 | 8 | 22 | 276 | 1018 | 2648 |

Persons skilled in the art will easily understand that the characteristics of different embodiments can be combined with characteristics of other possible embodiments whenever such a combination is technically possible.

All the information referring to examples or modes of embodiment, form part of the description of the invention.

## Claims

1. - Thermoplastic composition for the manufacture of transparent films, **characterised in that** it comprises
- thermoplastic potato starch, in a proportion greater than 10% by weight with respect to the total,
- biodegradable biopolyesters, in a proportion greater than 50% and less than 90% by weight with respect to the total, and
- other biomaterials and additives, other than a thermoplastic starch, in a proportion between 0% and 10% by weight with respect to the total,
the composition being biodegradable and compostable.

2. - Thermoplastic composition for the manufacture of transparent films, according to the preceding claim, **characterised in that** the biodegradable biopolyesters are chosen from the group formed by poly(butylene adipate-co-butylene terephthalate) (PBAT), poly(butylene sebacate-co-butylene terephthalate) (PBTSeT), poly(butylene succinate) (PBS), poly(butylene succinate-co-adipate) (PBSA), polylactic acid (PLA), polyhydroxy acids (PHA), poly(butylene-co-tetrahydrofurandimethylene succinate) PBTS or their mixtures.

3. - Thermoplastic composition for the manufacture of transparent films, according to claim 1, **characterised in that** the biodegradable biopolyesters are chosen from the group formed by poly(butylene adipate-co-butylene terephthalate) (PBAT) and poly(butylene sebacate-co-butylene terephthalate) (PBTSeT).

4. - Thermoplastic composition for the manufacture of transparent films, according to any of the preceding claims, **characterised in that** the other biomaterials and additives are chosen from the group formed by PVA (polyvinyl alcohol), PPC (polypropylene carbonate), PGA (polyglycolic acid), cellulose, modified cellulose, fibres, colouring agents, impact modifiers, organic and inorganic fillers, heat stabilisers, hydrolysis stabilisers, UV stabilisers, lubricants, enzymes, biodegradability accelerating additives, other additives and other biodegradable polymers.

5. - Thermoplastic composition for the manufacture of transparent films, according to any of the preceding claims, **characterised in that** the thermoplastic potato starch contains potato starch from the group formed by biomass and waste from the food industry containing potato starch.

6. - Thermoplastic composition for the manufacture of transparent films, according to any of the preceding claims, **characterised in that** it additionally comprises another complementary thermoplastic starch, in a proportion less than 30% by weight with respect to the total, containing one or more starches originating from the group formed by corn, pea, tapioca, cassava or obtained from starch-containing biomasses including waste from the agri-food industry.

7. - Thermoplastic composition for the manufacture of transparent films, according to any of the preceding claims, **characterised in that** the thermoplastic potato starch and, where appropriate, the complementary thermoplastic starch, comprise one or more plasticisers chosen from the group formed by water, polyhydric alcohols, ethers, thioethers, the esters thereof, any other compound or polymer capable of transforming a starch into thermoplastic starch, or a combination thereof.

8. - Thermoplastic composition for the manufacture of transparent films, according to any of the preceding claims, **characterised in that** the starch or starches are chosen from the group formed by native starch, modified starch, starch derivatives, or a mixture thereof.

9. - Transparent film **characterised in that** it comprises at least one layer (1) containing a composition as described in the preceding claims.

10. - Transparent film, according to claim 9, **characterised in that** the thickness of the film is between 7 and 100 microns.

11. - Transparent film according to any of claims 9 and 10, **characterised in that** it has a monolayer structure.

12. - Transparent film according to any of claims 9 and 10, **characterised in that** it has a multilayer structure.

13. - Transparent film, according to claim 12, **characterised in that** it has a structure formed by an intermediate layer (1) and two outer layers (2,3), the intermediate layer (1) being the one containing a composition as described in the preceding claims 1 to 7.

14. - Transparent film, according to claim 13, **characterised in that** the outer layers (2,3) consist of biopolyesters chosen from the group formed by aliphatic biopolyesters and aliphatic-aromatic biopolyesters.

15. - Transparent film, according to claim 14, **characterised in that** the outer layers consist of biopolyesters chosen from the group formed by poly(butylene adipate-co-butylene terephthalate) (PBAT) and poly(butylene sebacate-co-butylene terephthalate) (PBTSeT).
